# EUROPÄISCHE PATENTSCHRIFT

(11) **EP 1 414 612 B1**
(45) Veröffentlichungstag und Bekanntmachung des Hinweises auf die Patenterteilung: **23.12.2009**
(21) Anmeldenummer: 02758442.4
(22) Anmeldetag: 07.08.2002
(51) Int. Cl.: B23K 26/24, B23K 26/26, B23K 26/28, B23K 26/30

(54) **VERFAHREN ZUM LASERSTRAHLSCHWEISSEN**
LASER BEAM WELDING METHOD
PROCEDE DE SOUDURE AU FAISCEAU LASER

(30) Priorität: 07.08.2001 DE 10138651
(43) Veröffentlichungstag der Anmeldung: 06.05.2004
(73) Patentinhaber: Fraunhofer-Gesellschaft zur Förderung der angewandten Forschung e.V., 80686 München (DE)
(72) Erfinder: OLOWINSKY, Alexander, 52066 Aachen (DE); KRAMER, Thorsten, 81541 München (DE); GILLNER, Arnold, 52159 Roetgen (DE)
(86) Internationale Anmeldenummer: PCT/EP2002/008848
(87) Internationale Veröffentlichungsnummer: WO 2003/013779

(56) Entgegenhaltungen:
- EP-A- 1 201 610
- FR-A- 2 779 244
- GB-A- 2 253 282
- US-A- 5 013 275
- US-A- 5 451 742
- US-A- 5 595 670
- PATENT ABSTRACTS OF JAPAN vol. 2000, no. 01, 31. Januar 2000 (2000-01-31) & JP 11 267869 A (SUMITOMO METAL IND LTD), 5. Oktober 1999 (1999-10-05)
- PATENT ABSTRACTS OF JAPAN vol. 010, no. 096 (M-469), 12. April 1986 (1986-04-12) & JP 60 231587 A (MATSUSHITA DENKI SANGYO KK), 18. November 1985 (1985-11-18)

## Beschreibung

Die Erfindung betrifft ein Verfahren zum Schweißen von Werkstücken mit gepulster Laserstrahlung, insbesondere für Bauteile der Feinwerk- und Mikrosystemtechnik, nach dem Oberbegriff von Anspruch 1. Bevorzugtes Anwendungsgebiet ist das Fügen von Bauteilen im Bereich der Uhrenindustrie, und hierbei beispielsweise das Schweißen von Uhrenkomponenten wie Zahnräder, Kronen und Achsen mechanischer Uhren.

Ein weiteres Anwendungsgebiet ist die Elektroindustrie, so beispielsweise im Bereich von mic Membranen ausgestatteten Sensoren zur Messung von Gasdrücken oder Temperaturen. Bei derartigen Sensoren besteht das Erfordernis, die Membrane besonders dünn auszuführen, und mit den restlichen Komponenten zuverlässig zu verschweißen.

Weiterhin kann die Erfindung im Bereich der Automobilindustrie eingesetzt werden, so beispielsweise zum Fügen rotationssymmetrischer Bauteile mit einem Durchmesser kleiner als 5 mm wie beispielsweise Bauteile von Treibstoffzufuhreinrichtungen für Verbrennungsmotoren oder für Welle/Nabe-Verbindungen. Auch Steckerverbindungen können mit dem erfindungsgemäßen Schweißverfahren geschaffen werden, insbesondere bei solchen Steckern, die bislang typischerweise mit einem bleihaltigen Lot gelötet wurden. Besonders gut können Stecker aus Kupfer und Messing hergestellt werden. Außerdem ist die Erfindung zum Schweißen von Folienkondensatoren besonders geeignet, da zum Schutz des zwischen den Folien angeordneten Dielektrikums ein niedriger Energieeintrag erforderlich, der mit dem bisher bekannten Widerstandsspaltschweißen nicht erreichbar ist.

Weiterhin eignet sich das erfindungsgemäße Verfahren besonders gut zum Verschweißen von Bauteilen aus unterschiedlichem Werkstoffen, so insbesondere zum Verschweißen von Stahl mit Messing.

### Stand der Technik

Das Laserstrahlschweißen ist im Bereich der Makrotechnologie allgemein bekannt, und stellt dort das Hauptanwendungsgebiet für Laser dar. So offenbart die DE 3820848 A1 ein Schweißverfahren mit gepulster Laserstrahlung, dessen Intensität zur Bildung eines laserinduzierten Plasmas an der Fügestelle in Abhängigkeit eines oder mehrerer Fügestellenparameter geregelt wird.

Die EP 0440002 B1 beschreibt ferner eine Vorrichtung zum Punktschweißen, bei der mittels eines mehrgelenkigen Roboterarms Karosserieteile eines Kraftfahrzeuges geschweißt werden. Die zu verschweißenden Teile bewegen sich hierbei auf einem Förderband mit geringer Geschwindigkeit am Schweißroboter vorbei, und werden von diesem durch eine Vielzahl von Punktschweißungen geschweißt.

Die US 5,451,742 beschreibt ein Verfahren zum Verschweißen zweier flächig aufeinender liegender Platten mittels eines gepulsten Lasers, bei dem Laserstrahl und Plattenanordnung relativ zueinander bewegt werden können. Alternativ werden dabei Schweißnähte mittels einer Pulsfolge erzeugt oder aber einzelne Schweißpunkte mit einem einzelnen Laserpuls.

Die EP 0 923 424 B1 lehrt den Einsatz einer beweglich angeordneten Strahlablenkeinheit bei einem raumfestem Laserschweißkopf, wodurch aus einer Vielzahl von Punktschweißungen eine entsprechende Anzahl von räumlich voneinander getrennten Linienschweißungen wird.

Neben der Wahl gepulster Laserstrahlung für das Schweißen von Makrobauteilen wie bei den vorstehend genannten Druckschriften ist auch das Schweißen mit kontinuierlicher Laserstrahlung bekannt. Dieses führt im Allgemeinen zu einer gleichmäßigeren Energieeinbringung in die zu verschweißenden Bauteile, und damit zu einem geringeren Verzug. Ein weiterer Vorteil besteht in der geringeren Verschmutzung der Bauteile durch verflüssigten oder verdampftem Werkstoff.

Schweißverfahren mit kontinuierlicher Laserstrahlung, bei denen Laserstrahl und Werkstück relativ zueinander bewegt werden, werden in der US 5,013,275 und in der US 5,595,670 beschrieben.

Weiterhin ist allgemein bekannt, dass Bearbeitungs- oder Herstellungsverfahren im Bereich der Makrotechnologie im Allgemeinen nicht ohne Weiteres auf den Bereich der Mikrosystemtechnik übertragen werden können. Auf Grund der spezifischen Gegebenheiten der Mikrosystemtechnik sind daher vielfach neue beziehungsweise speziell angepasste Verfahren erforderlich. So werden Komponenten für mechanische Uhren aufgrund ihrer kleinen Abmessungen typischerweise mittels Fügeverfahren wie zum Beispiel das Kleben oder das Pressverbinden gefügt.

Beim Klebeverfahren sind jedoch Vor- und Nachbehandlungsschritte erforderlich, und die Bauteile müssen zeitaufwendig gereinigt werden. Weiterhin wird ein weiterer Arbeitsschritt erforderlich, nämlich das Aufbringen des Klebers. Diese Erfordernisse verlangsamen den Fertigungsprozess erheblich. Darüber hinaus ist die Zeit zwischen dem Aufbringen des Klebers und dem Verbinden der Teile kritisch hinsichtlich der angestrebten Klebeverbindung.

Bei Pressverbindungen müssen enge mechanische Toleranzen eingehalten werden, welche die Verwendung der Pressverbindungstechnik einschränkt. Bei der Pressverbindungstechnik muss mechanische Kraft aufgewendet werden. Diese Kraft führt jedoch zu Verformungen und Verzug an den Bauteilen. Damit sind die geforderten geringen Toleranzen häufig nur schwer einzuhalten.

### Darstellung der Erfindung

Der Erfindung liegt das technische Problem zugrunde, ein alternatives Fügeverfahren bereitzustellen, mit dem der Verzug der gefügten Bauteile besonders gering ausfällt.

Die Lösung dieses technischen Problems erfolgt durch die Merkmale des unabhängigen Anspruchs. Vorteilhafte Weiterbildungen werden durch die abhängigen Ansprüche angegeben.

Erfindungsgemäß wurde erkannt, dass das oben genannte technische Problem durch ein Schweißverfahren gelöst wird, bei dem die Schweißnaht mit einem einzigen Laserpuls der Pulsdauer τ_{H} erzeugt wird, wobei die zu erzeugende Schweißnaht einmal oder mehrfach hintereinander beaufschlagt wird und die Länge l der Schweißnaht bezogen auf die Schweißvorschubrichtung überwiegend durch das Produkt aus Vorschubgeschwindigkeit v und Pulsdauer τ_{H} dividiert durch die Anzahl der Beaufschlagungen bestimmt ist.

Der Erfindung liegt die Erkenntnis zugrunde, dass bei einer Relativgeschwindigkeit zwischen Laserstrahl und Werkstück der Schweißfleck auf dem Werkstück länger ausfällt als ohne Relativbewegung.

Ohne eine derartig hohe Relativgeschwindigkeit zwischen Werkstück und Laserstrahl ist die Schweißnahtlänge 1 bezogen auf die Schweißvorschubrichtung, so beispielsweise der Laserstrahlvorschubrichtung, typischerweise um den Faktor 1.5 bis 2 größer als die Ausdehnung der Schweißnahtbreite b₀ bezogen auf diese Richtung. Näherungsweise kann damit gesagt werden, dass für diesen Fall geringer Relativgeschwindigkeit die beiden Größen gleich groß sind, dass also 1 ≈ b₀ ist

Wenn die Relativgeschwindigkeit zwischen Werkstück und Laserstrahlung Null ist, ist beim Schweißen mit einem rotationssymmetrischen Strahl die Schweißnahtlänge l zudem gleich der Schweißnahtbreite b₀, d.h. 1 = b₀ für v = 0. Da überwiegend mit rotationssymmetrischer Strahlung gearbeitet wird, wird im Rahmen dieser Anmeldung mit der Größe Schweißnahtbreite b₀ generell auch die Länge der Schweißnaht in Schweißvorschubrichtung bei fehlender Relativgeschwindigkeit zwischen Werkstück und Laserstrahl bezeichnet; unabhängig davon, ob der Laserstrahl tatsächlich rotationssymmetrisch ist. Das erfindungsgemäße Verfahren ist selbstverständlich unabhängig von der Form des Laserstrahls anwendbar.

Bei Werkstücken aus Stahl ist beispielsweise beim bekannten Punktschweißen, bei dem der Strahldurchmesser der Laserstrahlung auf dem Werkstück bezogen auf die bzw. gemessen in Laserstrahlvorschubrichtung 200 µm lang ist, die Schweißnahtlänge in diese Richtung in etwas ebenfalls 200µm lang. Für eine Soll-Schweißnahtlänge im Millimeter- bis Zentimeterbereich ist daher eine Abfolge von sich überlappenden Schweißpunkten erforderlich.

Ist die Relativgeschwindigkeit v zwischen Werkstück und Laserstrahl größer Null, so erfährt der Strahldurchmesser auf dem Werkstück einen Vorschub um die Strecke v x t, wobei t die Zeit ist, während der das Werkstück bestrahlt wird. Bei einem Einsatz eines einzelnen Laserpulses entspricht dieser Zeit t die Pulsdauer τ_{H}. Die gesamte Schweißnahtlänge ist dann l = bₒ+ v x τ_{H}.

Beim Setzen eines einzelnen Schweißpunkts beim bekannten Punktschweißen wird die Schweißnahtlänge l dieses Einzelschweißpunktes durch den Strahldurchmesser dominiert bzw. ist der Term v x τ_{H} klein gegenüber der vom Strahldurchmesser dominierten Schweißnahtbreite b₀. Beim erfindungsgemäßen Verfahren sind die Verhältnisse entgegengesetzt: hier überwiegt bei der Schweißnahtlänge 1 der Term v x τ_{H}, bzw. wird die Schweißnahtlänge im überwiegenden Maße durch den Vorschub des Strahldurchmessers auf dem Werkstück bestimmt.

Im Ergebnis ist die entstehende Schweißnaht in der Laserstrahlvorschubrichtung länger als ohne eine entsprechend große Relativgeschwindigkeit. Das Produkt aus Vorschubgeschwindigkeit v und Pulsdauer τ_{H} mindestens um den Faktor η_{S} = 40, größer als die Ausdehnung der Schweißnahtbreite b₀ auf dem Werkstück bezogen auf die Schweißvorschubrichtung. η_{S} ist dabei wie ersichtlich der Quotient aus dem Produkt der Vorschubgeschwindigkeit und der Pulslänge zum Schweißnahtbreite b₀, d.h. η_{S} = (v * τ_{H}) / b₀.

Im Falle mehrfacher Beaufschlagung der Schweißnaht ist zu berücksichtigen, dass die erforderliche Relativgeschwindigkeit noch mit der Anzahl der Beaufschlagungen multipliziert werden muss.

Es kann vorgesehen sein, dass zwischen Laserstrahl und Werkstück Relativgeschwindigkeiten bis 50 m/min gewählt werden. Hierdurch werden besonders lange Schweißnähte gewährleistet, denn die erzielte Länge der Schweißnaht ergibt sich aus dem Produkt von Relativgeschwindigkeit v und Pulsdauer τ_{H}. Ist beispielsweise die Pulsdauer τ_{H} = 20 ms, die Schweißnahtbreite b₀ = 0,4 mm und beträgt die Relativgeschwindigkeit v = 50 m/min, so kann mit dem erfindungsgemäßen Verfahren eine Schweißnahtlänge 1 = 17,1 mm mittels eines einzigen Laserpulses geschaffen werden. Weiterhin ermöglicht die hohe Relativgeschwindigkeit das Einbringen der Pulsenergie über eine besonders große Strecke, und damit mit besonders geringer Streckenenergie, was zu noch verzugsärmeren Bauteilen führt. Eine derart hohe Relativgeschwindigkeit führt zu einem Faktor η_{S} > 40. Auf diese Weise konnten bei Kupfer und Messing zufriedenstellende Schweißergebnisse erreicht werden.

Bei der Wahl einer Relativgeschwindigkeit von über 50 m/min steht zu erwarten, dass sich physikalische Effekte wie Humping einstellen, sodass abhängig vom jeweiligen Werkstoff die für das erfindungsgemäße Verfahren maximal mögliche Relativgeschwindigkeit auf 50 bis 60 m/min begrenzt sein sollte. Sind diese Effekte weniger stark ausgeprägt, so sind auch noch höhere Relativgeschwindigkeiten wählbar.

Das erfindungsgemäße Schweißverfahren vermeidet die Beaufschlagung mit Dauerstrichstrahlung oder mit einer gepulster Laserstrahlung in Gestalt einer Pulsfolge. Dies bedingt die Einbringung einer besonders geringen Gesamtenergie in das Bauteil, und damit einen besonders geringen Verzug der Bauteile. So ist der Energieeintrag gegenüber konventioneller gepulster Laserstrahlung von Makrobauteilen etwa um den Faktor 10 kleiner.

Ein weiterer Vorteil des erfindungsgemäßen Schweißverfahrens besteht darin, dass beim Schweißen von Legierungen die Schweißnaht eine geringere Rissanfälligkeit und weniger Poren aufweist. Es wird vermutet, dass die Ursache für die verbesserte Schweißnahtqualität darin begründet liegt, dass beim erfindungsgemäßen Verfahren der Werkstoff nur ein einziges Mal aufgeschmolzen wird, wohingegen beim Punktschweißen mit sich überlappenden Schweißpunkten der Werkstoff mehrfach aufgeschmolzen wird. Beim mehrfachen Aufschmelzen steht dem Werkstoff jedoch eine größere Zeit zur Verfügung, während der sich die Legierungsbestandteile entmischen und einer oder mehrere Bestandteile der Legierung verdampfen können. Beim erfindungsgemäßen Verfahren mit einmaligem Aufschmelzen des Werkstoffs arbeitet man insofern zu schnell, als dass sich eine nennenswerte Entmischung ausbilden kann.

Weiterhin erlaubt diese Vorgehensweise ein besonders sauberes Schweißen, das heißt es kommt nicht zu Verunreinigungen durch aus dem Schweißbereich stammenden Partikeln. Ein derartiges Verschmutzungsproblem liegt beispielsweise bei konventioneller Schweißung von Werkstücken aus Messing, d.h. der Legierung CuZn37, vor. Diese Legierung hat einen Schmelzpunkt von 920°C, und die Verdampfungstemperatur von Zink liegt bei 908°C. Die hohe Energieeinbringung bei konventioneller Schweißung im gepulsten Betrieb führt hier zur Verdampfung des Zinks aus der Legierung. Beim erfindungsgemäßen Verfahren wird hingegen experimentell keine Verdampfung von Zink beobachtet, und die geschweißten Werkstücke aus dieser Legierung bleiben sauber. Die Ursache ist vermutlich, wie im vorangegangenen Abschnitt dargelegt, die deutlich geringere Entmischung der Legierung infolge des nur einmaligen Aufschmelzens, sodass sich kein nennenswerter Anteil von entmischtem und damit elementar vorliegendem Zink ausbilden kann.

Generell hat sich gezeigt, dass das erfindungsgemäße Verfahren besonders für metallische Werkstoffe vorteilhaft ist. Dies liegt an der im allgemeinen hohen Wärmeleitfähigkeit von metallischen Werkstoffen. Die hohe Wärmeleitfähigkeit macht es erforderlich mit hohen Leistungen zu arbeiten, damit die eingebrachte Energie zu einem möglichst hohen Anteil zur Erzeugung eines lokal begrenzten Schmelzbades dient und sich nicht im ganzen Werkstück verteilt. Verschärfend kommt hinzu, dass beispielsweise Kupfer eine niedrige Absorption für die eingebrachte Strahlung aufweist. Daher können einige metallische Werkstoffe, zum Beispiel Messing und Kupfer, nur begrenzt mit Dauerstrichlasern behandelt werden, da letztere in der Regel eine Leistung liefern, die deutlich niedriger als die Pulsleistung gepulster Laser ist.

Dadurch, dass die mittlere Ausgangsleistung der gepulsten Laserstrahlung gering ausfällt, besitzt die Laserstrahlung eine bessere Strahlqualität im Vergleich zu einem CW-Laser mit gleicher Leistung, und man kann daher auf einen kleineren Durchmesser bei gleichem Arbeitsabstand fokussieren. Dies bedingt die Möglichkeit, Schweißnähte der Breite < 100 µm zu erzeugen, die für das Auge kaum noch sichtbar sind. Dies ist bei Fügeverbindungen für Produkte, beispielsweise Uhren, wichtig, an die hohe optische Anforderungen gestellt werden, beziehungsweise wo ein makelloses Erscheinungsbild des Produkts für die Wertschätzung des Kunden kaufentscheidend ist.

Gegenüber den vorbekannten Verfahren des Pressverbindens, Klebens und Bördelns weisen Laserschweißverfahren den weiteren Vorteil einer besonders kurzen Bearbeitungsdauer auf, da Verfahrensschritte wie das Reinigen der Bauteile nach dem Fügen eingespart werden können, was die Bearbeitung der Bauteile preiswerter macht. Gegenüber bekannten Laserschweißverfahren weist das erfindungsgemäße Verfahren darüber hinaus den Vorteil einer um den Faktor 10 niedrigeren Prozesszeit auf. Zudem wird mit den bekannten Laserschweißverfahren zuviel Energie in die Bauteile eingebracht, dass kleine Bauteile derart erwärmt würden, dass ein nicht mehr hinnehmbarer Verzug der Bauteile erfolgen würde. Erst das erfindungsgemäße Verfahren macht das Laserschweißen auch kleiner Bauteile mit den gegenüber anderen Verbindungstechniken verbundenen bekannten Vorteilen möglich.

Die Bereitstellung eines Laserpulses kann mit einem konventionellen gepulsten Laser erfolgen, bei dem beim erfindungsgemäßen Verfahren eine geringe mittlere Laserleistung ausreichend ist. Gegenüber Dauerstrich-Laserstrahlquellen besitzt die gepulste Laserstrahlquelle den Vorteil, dass Investitions- und Unterhaltskosten und auch die entsprechenden Kosten für das benötigte Kühlaggregat wegen der geringeren mittleren Ausgangsleistung besonders klein ausfallen. Alternativ kann aber auch ein lampengepumpter oder ein diodengepumpter CW-Laser gewählt werden, insoweit Laserpulse mit einer Pulsdauer < 100 ms einstellbar sind.

Eine besonders verzugsarme Bearbeitung der Bauteile kann erreicht werden, wenn die Relativgeschwindigkeit zwischen Werkstück und Laserstrahlung so hoch gewählt wird, dass zur Herstellung einer einzelnen Schweißnaht die Bauteile mehrfach unmittelbar hintereinander mit einem einzigen Laserpuls längs der zu erzeugenden Schweißnaht beaufschlagt werden. Damit wird die Energie praktisch gleichzeitig in die gesamte zu erzeugende Schweißnaht eingebracht. Die daraus resultierende praktisch gleichzeitige Erwärmung der Bauteile längs der Schweißnaht führt zu einem niedrigeren Verzug als die zeitlich aufeinanderfolgende Erwärmung der Bauteile längs der Schweißnaht. Bei dieser alternativen Ausführungsform der Erfindung wird die Schweißnahtlänge überwiegend aus dem Produkt von Vorschubgeschwindigkeit v und der Pulslänge τ_{H} dividiert durch die Anzahl der Beaufschlagungen bestimmt.

Diese alternative Ausführungsform der Erfindung ist insbesondere bei kleinen rotationssymmetrischen Bauteilen möglich, die mit hoher Geschwindigkeit gedreht werden können. Zudem führt bei rotationssymmetrischen Bauteilen die nahezu gleichzeitige Erwärmung zu einer besonderen Senkung des Verzugs.

In einem weiteren Aspekt der Erfindung ist vorgesehen, dass die Leistung des Laserpulses zeitlich verändert wird. Durch eine derartige Veränderung der Pulsleistung mit der Zeit bzw. einer Pulsformung in zeitlicher Hinsicht besteht die Möglichkeit, den sich während der Bearbeitung möglicherweise ändernden optischen Eigenschaften des Materials Rechnung zu tragen. So ist beim Schweißen mit Laserstrahlung der Einkoppelgrad stark von der Absorption der Oberfläche abhängig. Auch die Oxidation der Oberfläche und die Oberflächenrauheit beeinflussen den Schweißvorgang. Die Absorption ist zudem von der Temperatur des Werkstoffs abhängig und steigt im Allgemeinen mit steigender Temperatur an. Durch die Pulsformung können auf diese Weise die sich geänderten Gegebenheiten längs der Schweißnahtlänge berücksichtigt werden, und können außerdem die Einschweißtiefe und Nahtbreite sowie die Oberflächenqualität der Schweißnaht beeinflusst werden.

Zur weiteren Verbesserung der Schweißnahtqualität kann zudem vorgesehen sein, dass ein Detektor charakteristische Strahlung, wie beispielsweise reflektierte Strahlung oder Wärmestrahlung, aus dem Schweißbereich erfasst, und die Laserleistung in Abhängigkeit von den vom Detektor erhaltenen Signalen während der Bearbeitung nachgeregelt wird. Da die vom Detektor erhaltenen Signale vor allem temperaturabhängig sind, kann insbesondere eine temperaturabhängige Nachregelung der Laserleistung erfolgen. Diese Nachregelung der Laserleistung führt zu einer optimierten Energieeinkopplung in das Werkstück im Sinne der Ausführungen des vorangegangenen Absatzes, und somit zu einer Verbesserung des Schweißergebnisses.

Selbstverständlich ist es möglich, dass bei einem Bauteil mehrere Schweißnähte mit dem erfindungsgemäßen Schweißverfahren vorgesehen werden, so beispielsweise in Form einer Steppnaht.

Die Relativgeschwindigkeit zwischen Laserstrahl und zu verschweißenden Bauteilen kann entweder durch Bewegen der Bearbeitungsoptik, durch Bewegen der Bauteile, oder durch Bewegen der Bearbeitungsoptik und der Bauteile erfolgen. Die jeweilige Wahl ist abhängig von Geometrie der Bauteile und den erforderlichen Fügeverbindungen. Die eingestellte Relativgeschwindigkeit ist abhängig von der Art der Bewegung, zum Beispiel linear oder Rotation, und wird von physikalischen Effekten wie Humping begrenzt.

Eine weitere Verbesserung der Schweißnähte kann erreicht werden, wenn die Relativbewegung zwischen Werkstück und Laserstrahlung so erfolgt, dass der Laserstrahl möglichst genau auf die gewünschte Schweißnaht gerichtet wird, das heißt eine Nahtverfolgung vorgenommen wird. Dazu kann eine Auswerteeineinheit, beispielsweise eine Kamera oder eine Einrichtung für ein Lichtschnittverfahren, vorgesehen werden, die auswertet, an welcher Stelle der Laserstrahl auf das Werkstück auftreffen soll. Abhängig von dieser Auswertung kann die Relativbewegung zwischen Werkstück und Laserstrahlung geregelt werden. Besonders vorteilhaft ist es, wenn während des Schweißens zusätzlich ermittelt wird, an welcher Stelle des Werkstücks der Laserstrahl auftrifft. Mit Hilfe eines Vergleichs zwischen tatsächlichem Auftreffort und dem gewünschten Auftreffort der Laserstrahlung kann die Relativbewegung zwischen Werkstück und Laserstrahlung geeignet nachgeregelt werden, sodass die Laserstrahlung möglichst genau längs der gewünschten Schweißnaht auf das Werkstück auftrifft. Damit können Positionierungsfehler der zu schweißenden Bauteile ausgeglichen werden und höhere Toleranzen bei der Positionierung der zu schweißenden Bauteile hingenommen werden. Ohne die vorgenannten Maßnahmen sind die zulässigen Toleranzen geringer als 10% der Schweißnahtbreite b₀.

Es ist möglich bei ruhenden Bauteilen den Laserstrahl zu bewegen. Dies ist häufig günstig, da der Laserstrahl mitunter genauer bewegt werden kann als die Bauteile. Außerdem kann die Bewegung der Bauteile zu einer unerwünschten Verschiebung der zu schweißenden Bauteile untereinander führen.

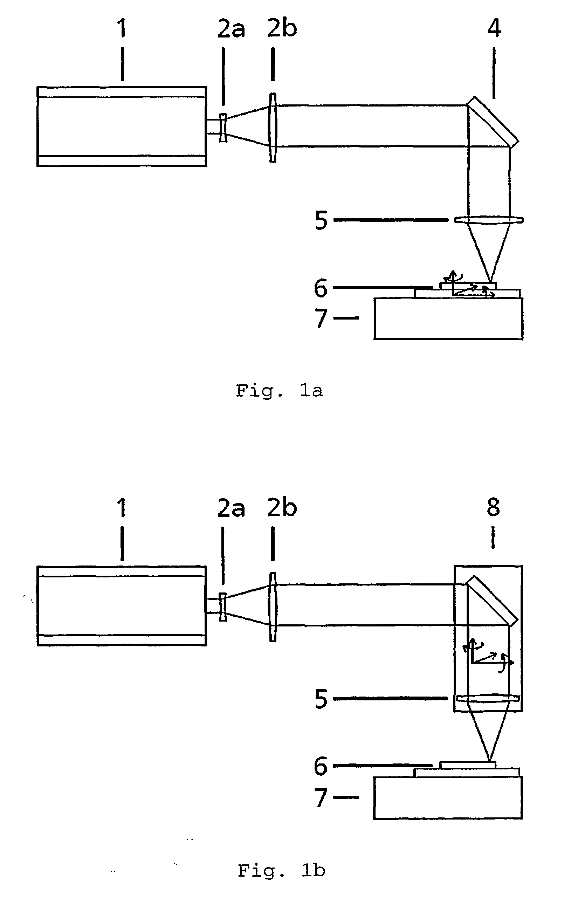

Die Bearbeitung der Bauteile kann zum Beispiel gemäß Fig. 1a dadurch erfolgen, dass der Strahl eines Lasers 1 über eine Strahlaufweitung 2a und 2b, und die Strahlführung 4 über die Bearbeitungsoptik 5 auf das Bauteil 6 gerichtet wird. Das Bauteil befindet sich auf einem beweglich ausgeführten Positioniersystem 7. Das Positioniersystem kann beispielsweise ein Drehteller oder ein Linearverschiebetisch sein. Es können auch Kombinationen aus Drehteller und linear verschiebbarem Positioniertisch vorgesehen werden. Demgemäss sind lineare Bewegungen, Drehbewegungen sowie Überlagerungen von Drehbewegungen und linearen Bewegungen des Werkstücks erreichbar. Durch diese Bewegungen ist es möglich lineare Schweißnähte, rotationssymmetrische Schweißnähte und Schweißnähte mit einer freien Form zu erhalten.

Eine andere Möglichkeit zur Erzeugung einer Relativbewegung zwischen Werkstück und Laserstrahl ist es, den Laserstrahl zu bewegen. Hierzu kann gemäß Fig. 1b eine Spezialoptik wie zum Beispiel ein Scanner 8 eingesetzt werden.

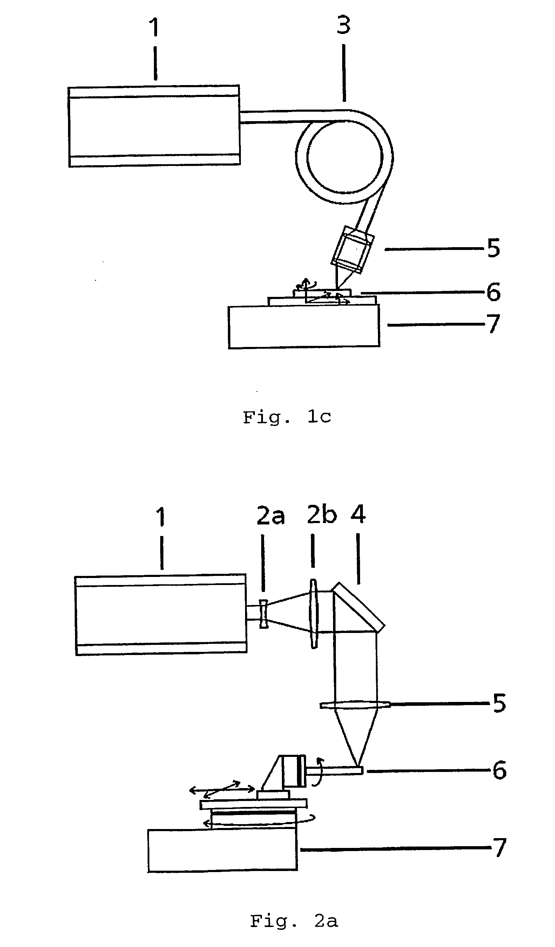

Anstelle einer starren Strahlführung wie bei Fig. 1a kann auch gemäß Fig. 1c eine flexible Lichtleitfaser 3 eingesetzt werden, aus dem das Licht in die Bearbeitungsoptik 5 eintritt, um anschließend auf das Bauteil 6 gerichtet zu werden, welches vom Bewegungssystem 7 bewegt wird.

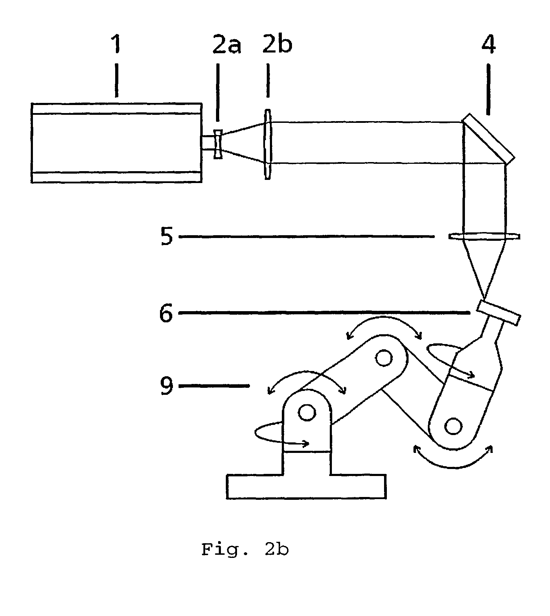

Eine weitere Möglichkeit besteht darin, dass der Laserpuls auf ein Bauteil 6 gerichtet wird, welches von einem 4-Achsen-Positioniersystem 7 gehalten wird, vgl. Fig. 2a. Das Bauteil 6 kann hierbei sowohl um eine in der Zeichenebene liegende senkrechte Achse, als auch um eine in der Zeichenebene liegende waagrechte Achse gedreht werden, was in Fig. 2a durch die gekrümmten Pfeile angedeutet ist. Zusätzlich kann das Bauteil innerhalb einer Ebene, welche senkrecht zur Zeichenebene steht, beliebig hin und herbewegt werden, was in Fig. 2a durch die sich kreuzenden Pfeile angedeutet ist.

Fig. 2b zeigt die Möglichkeit auf, das Laserlicht über eine flexible Lichtleitfaser 3 in die Bearbeitungsoptik 5, und von dort auf das Bauteil 6 zu richten, welches vom 4-Achsen-Positioniersystems 7 bewegt wird. Die Wahl eines 4-Achsen-Positioniersystems 7 ermöglicht insbesondere rotationssymmetrische Schweißnähte mit einem einzigen Laserpuls.

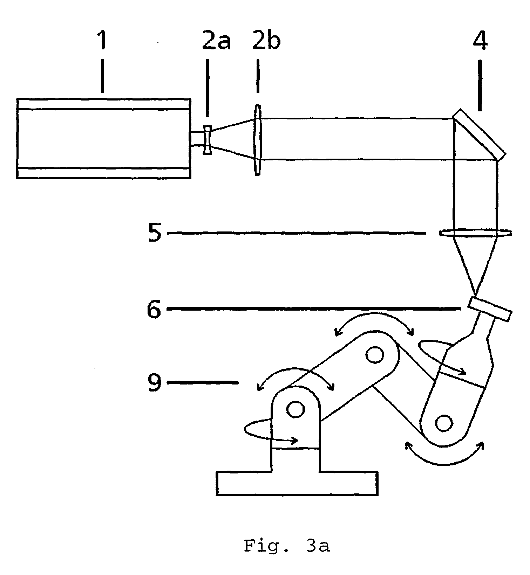

Fig. 3a zeigt bei gleicher Strahlführung wie bei Fig. 1a die Möglichkeit auf, das Laserlicht anschließend auf ein vom Roboter 9 bewegtes Bauteil 6 zu richten.

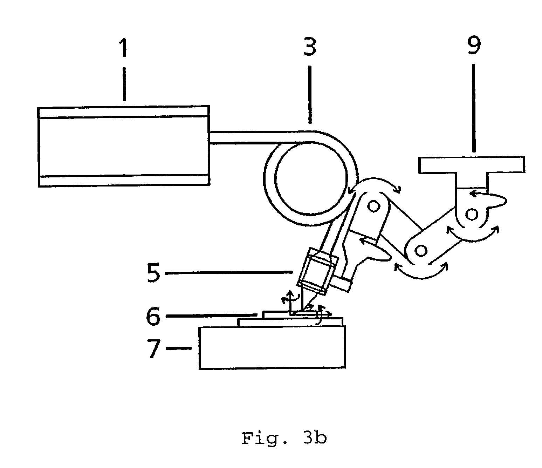

Fig. 3b zeigt die Variante eines Industrie-Schweißroboters 9, welcher die Lichtleitfaser 3 führt um das Laserlicht auf vorgegebene Stellen des Bauteils 6 zu richten welche vom Bewegungssystems 7 geeignet positioniert wird.

Nachfolgend soll die Erfindung anhand von dem vierten Ausführungsbeispiel weiter erläutert werden.

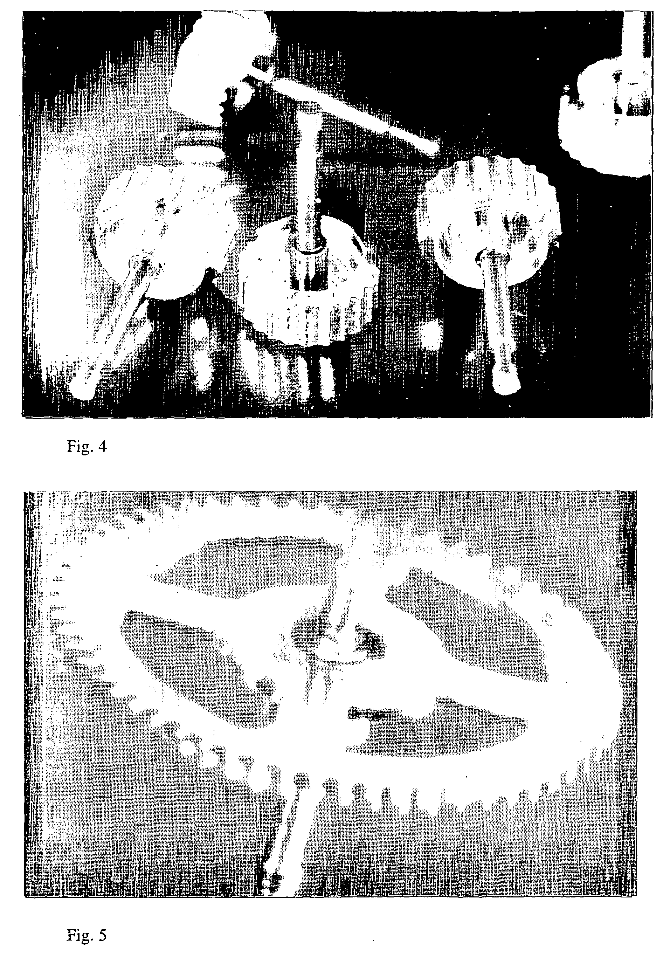

In einem ersten Ausführungsbeispiel gemäß Fig. 4 werden Uhrenkomponenten geschweißt. Die Achsen und Kronen mechanischer Uhren sind in Fig. 4 dargestellt und bestehen beide aus rostfreiem Stahl. Der Durchmesser der Achse beträgt 0,9 mm, und der Durchmesser der Krone 5 mm. In der Fertigung werden zunächst Achse und Krone separat hergestellt, und dann die Achse in die zylindrische Ausnehmung in der Mitte der Krone eingeführt. Die Schweißung dient hierbei zur Gewährleistung der Achse/Krone-Verbindung. Die Schweißung erfolgte mit einem einzigen Laserpuls der Pulsdauer 20 ms, der Pulsleistung 125 W bei einer Pulsenergie von 2,5 J. Mit einer Schweißgeschwindigkeit von 8,5 m/min betrug die Streckenenergie 0,88 J/mm bei einer Schweißnahtlänge von π x 0,9 mm = 2,8 mm. Die mit diesem Verfahren geschweißten Uhrenkomponenten weisen eine deutlich erhöhte Formgenauigkeit und -stabilität gegenüber solchen durch Klebung gefertigten Uhrenkomponenten auf. Eine Vorbehandlung ist nicht mehr erforderlich, und die Uhrenkomponenten können in der Regel ohne nachfolgende Reinigung eingesetzt werden, insbesondere wenn zur Vermeidung von Verschmutzung und Oxidation mit Schutzgas geschweißt wird. Weiterhin konnten die Abzugskräfte gegenüber klebeverbundenen Bauteilen um den Faktor 10 gesteigert werden.

In einem zweiten Ausführungsbeispiel wurde gem. Fig. 5 eine Achse mit 0,3 mm Durchmesser mit einem Zahnrad für eine mechanische Uhr verschweißt. Die Achse besteht aus rostfreienm Stahl, und das Zahnrad aus Messing, d.h. der Legierung CuZn37. Bei einer Relativgeschwindigkeit von 2,83 m/min erfolgte die Schweißung bei einer Pulsenergie von 1,3 J für die gesamte Schweißnaht und einer Pulsdauer von 20 ms. Die Streckenenergie betrug 1,38 J/mm.

In einem dritten Ausführungsbeispiel wurde die Schweißung gemäß Ausführungsbeispiel 2 mit einer Relativgeschwindigkeit von 15 m/min vorgenommen. Die Schweißnahtlänge 1 entspricht hier dem Umfang π x 0,3 mm = 0,95 mm. Die Schweißung erfolgte mit einem einzigen Puls der Pulsdauer 4 ms bei einer Pulsenergie von 150 W x 4 ms = 0,6 J, und einer Streckenenergie von 0,63 J/mm.

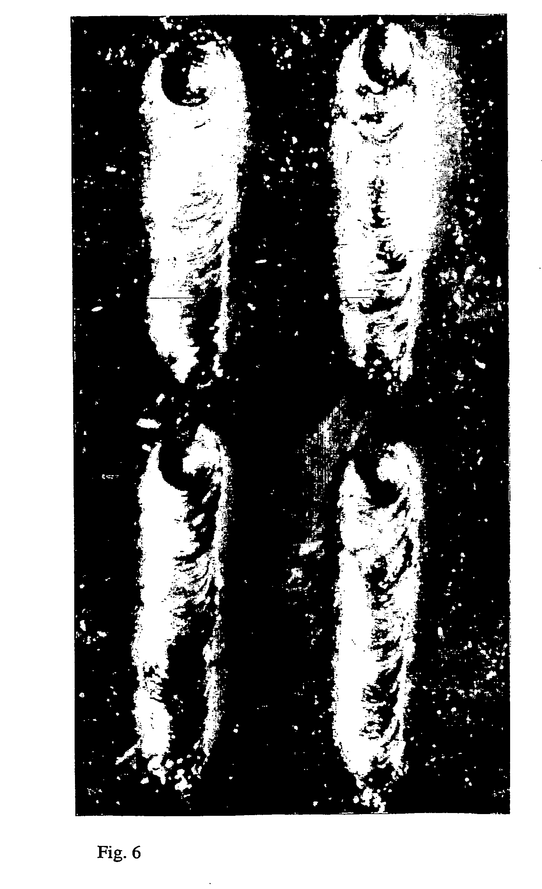

In einem vierten Ausführungsbeispiel gemäß Fig. 6 wurde ein Kupferblech der Dicke 0,2 mm geschweißt. Eine einzelne Schweißnaht besitzt eine Nahtbreite von b₀ = 0,7 mm bei einer Nahtlänge von 1 = 3,5 mm. Sie wurde mit einem einzigen Puls mit einem Brennfleckdurchmesser von 0,25 mm und einer Pulsdauer von 20 ms erzeugt. Die Pulsenergie betrug 25,8 J bei einer Streckenenergie von 7,4 J/mm.

Das gleiche Schweißergebnis bezogen auf die Festigkeit bei gleicher Schweißnahtlänge konnte zum Vergleich mit konventioneller gepulster Bearbeitung mit der selben Strahlquelle erzielt werden, indem das Kupferblech mit 11 Einzelpulsen à 21,6 J Pulsenergie bestrahlt wurde. Die dem Werkstück zugeführte Energie betrug damit insgesamt 237,6 J bei einer Streckenenergie von 67,9 J/mm. Die Pulsleistung der verwendeten Rechteckpulse betrug dabei P_{H} = 2700 W, die Pulsdauer τ_{H} = 8 ms und die Pulswiederholfrequenz f_{P} = 2,5 Hz. Die Vorschubgeschwindigkeit war 1,5 mm/s; die nötige Bearbeitungszeit betrug 4,4 s. Mit dem erfindungsgemäßen Verfahren ist die Bearbeitungszeit gleich der dafür nötigen Pulsdauer τ_{H} = 20 ms. Die Bearbeitungszeit bei der konventionellen Schweißung ist somit um einen Faktor 220 größer. Bei der konventionellen Schweißung musste somit ferner die 9,2-fache Energiemenge in das Werkstück eingekoppelt werden um die selbe Festigkeit bei gleicher Schweißnahtlänge zu erreichen. Zudem ist eine Nahtbreite von 0,75 mm erforderlich. Ein Grund für die etwas höhere Nahtbreite bei der konventionell gepulsten Schweißtechnik ist der höhere Energieeintrag und die daraus resultierende stärkere Erwärmung des Werkstücks. Damit wird ein etwas größerer Bereich des Werkstücks aufgeschmolzen und es entsteht eine größere Schweißnaht.

### Bezugszeichenliste

- 1: Laserstrahlquelle
- 2: Strahlaufweitung
- 3: Lichtleitfaser
- 4: Strahlführung
- 5: Bearbeitungsoptik
- 6: Bauteil
- 7: Positionier- bzw. Bewegungssystem
- 8: Scanner
- 9: Roboter

## Patentansprüche

1. Verfahren zum Laserstrahlschweißen eines Werkstücks (6) unter Verwendung eines gepulst betriebenen Lasers (1), insbesondere zur Herstellung von Bauteilen der Feinwerk- und Mikrosystemtechnik,
bei dem der Laserstrahl und das Werkstück (6) mit einer Geschwindigkeit v relativ zueinander bewegt werden, bei dem eine Schweißnaht mit einem einzigen Laserpuls der Pulsdauer τ_{H} erzeugt wird, wobei die zu erzeugende Schweißnaht vom Laserpuls einmal oder mehrfach hintereinander beaufschlagt wird, und bei dem die Länge l der Schweißnaht bezogen auf die Schweißvorschubrichtung überwiegend durch das Produkt aus Vorschubgeschwindigkeit v und Pulsdauer τ_{H} dividiert durch die Anzahl der Beaufschlagungen bestimmt ist,
wobei der Faktor ηₛ, der der Quotient aus dem Produkt der Vorschubgeschwindigkeit, der Anzahl der Beaufschlagungen und der Pulsdauer zur Ausdehnung der Schweißnahtbreite b₀ auf dem Werkstück bezogen auf die Schweißvorschubrichtung darstellt, größer als 40 ist.

2. Verfahren nach Anspruch 1, **dadurch gekennzeichnet, dass** die Leistung des Laserpulses zeitlich verändert wird.

3. Verfahren nach einem der vorhergehenden Ansprüche, **dadurch gekennzeichnet, dass** ein Detektor charakteristische Strahlung aus dem Schweißbereich erfasst und die Laserleistung abhängig von der vom Detektor erfassten Strahlung während der Bearbeitung nachgeregelt wird.

4. Verfahren nach einem der vorhergehenden Ansprüche, **dadurch gekennzeichnet, dass** bei einem Werkstück mehrere Schweißnähte vorgesehen sind.

5. Verfahren nach einem der vorhergehenden Ansprüche, **dadurch gekennzeichnet, dass** das Werkstück und der Laserstrahl zueinander eine lineare Bewegung und/oder eine Drehbewegung ausführen.

6. Verfahren nach einem der vorhergehenden Ansprüche, **dadurch gekennzeichnet, dass** die Relativbewegung zwischen Werkstück und Laserstrahl abhängig von einer mit einer Auswerteeinheit erfassten gewünschten Auftrittsposition des Laserstrahls auf das Werkstück geregelt wird.

7. Verfahren nach Anspruch 6, **dadurch gekennzeichnet, dass** die Relativbewegung zwischen Werkstück und Laserstrahl abhängig von einer mit einer Auswerteeinheit erfassten momentanen Auftrittsposition des Laserstrahls auf dem Werkstück geregelt wird.

8. Verfahren nach einem der vorhergehenden Ansprüche, **dadurch gekennzeichnet, dass** die Relativbewegung zwischen Werkstück und Laserstrahlung durch Bewegung der Laserstrahlung erreicht wird.

9. Verfahren nach einem der vorhergehenden Ansprüche, **dadurch gekennzeichnet, dass** die Schweißnaht in Schutzgasatmosphäre hergestellt wird.

10. Verfahren nach einem der vorhergehenden Ansprüche, **dadurch gekennzeichnet, dass** Uhrenkomponenten geschweißt werden.

11. Verfahren nach einem der Ansprüche 1 bis 9, **dadurch gekennzeichnet, dass** Bauteile von Treibstoffzufuhreinrichtungen für Verbrennungsmotoren oder Steckerverbindungen geschweißt werden.

12. Verfahren nach einem der Ansprüche 1 bis 9, **dadurch gekennzeichnet, dass** Folienkondensatoren geschweißt werden.

## Claims

1. Method for the laser-beam welding of a workpiece (6), using a pulse-operated laser (1), in particular for the production of components in precision mechanics and microsystem engineering, in which the laser beam and the workpiece (6) are moved in relation to one another at a speed v, in which a weld seam is generated by means of a single laser pulse of pulse duration τ_{H}, the weld seam to be generated being acted upon by the laser pulse once or several times in succession, and in which the length 1 of the weld seam in relation to the welding advance direction is determined predominantly by the product of the advancing speed v and pulse duration τ_{H}, divided by the number of pulse actions, the factor ηₛ, which represents the quotient of the product of the advancing speed, the number of pulse actions and the pulse duration to the extent of the weld-seam width b₀ on the workpiece in relation to the welding advance direction, being greater than 40.

2. Method according to Claim 1, **characterized in that** the power of the laser pulse is varied in time.

3. Method according to one of the preceding claims, **characterized in that** a detector detects characteristic radiation from the welding region, and the laser power is readjusted, during machining, as a function of the radiation detected by the detector.

4. Method according to one of the preceding claims, **characterized in that** a plurality of weld seams are provided in a workpiece.

5. Method according to one of the preceding claims, **characterized in that** the workpiece and the laser beam execute a linear movement and/or a rotational movement with respect to one another.

6. Method according to one of the preceding claims, **characterized in that** the relative movement between the workpiece and the laser beam is regulated as a function of a desired impingement position, detected by means of an evaluation unit, of the laser beam upon the workpiece.

7. Method according to Claim 6, **characterized in that** the relative movement between the workpiece and laser beam is regulated as a function of an instantaneous impingement position, detected by means of an evaluation unit, of the laser beam upon the workpiece.

8. Method according to one of the preceding claims, **characterized in that** the relative movement between the workpiece and laser radiation is achieved by means of a movement of the laser radiation.

9. Method according to one of the preceding claims, **characterized in that** the weld seam is produced in a protective gas atmosphere.

10. Method according to one of the preceding claims, **characterized in that** watch components are welded.

11. Method according to one of Claims 1 to 9, **characterized in that** components of fuel supply devices for internal combustion engines or plug connections are welded.

12. Method according to one of Claims 1 to 9, **characterized in that** foil capacitors are welded.

## Revendications

1. Procédé de soudage par laser d'une pièce (6) en utilisant un laser pulsé (1), notamment pour fabriquer des pièces de système de mécanique miniature et de microsystème, selon lequel
- on déplace l'un par rapport à l'autre le faisceau laser et la pièce (6) à une vitesse relative (v),
- on réalise un cordon de soudure avec une seule impulsion laser de durée d'impulsion τ_{H},
- on applique sur le cordon de soudure à réaliser, une impulsion laser ou plusieurs impulsions laser successives, et
- la longueur (1) du cordon de soudure par rapport à la direction de soudage, est définie principalement par le produit de la vitesse d'avance (v) et de la durée d'impulsion τ_{H}, divisé par le nombre d'applications,
- le coefficient ηₛ, étant le quotient supérieur à 40 du produit de la vitesse d'avance, du nombre d'applications et de la durée d'impulsion par l'extension en largeur b₀ du cordon de soudure sur la pièce rapportée à la direction de soudage.

2. Procédé selon la revendication 1,
**caractérisé en ce que**
la puissance de l'impulsion laser est variable dans le temps.

3. Procédé selon les revendications précédentes,
**caractérisé en ce qu'**
un détecteur saisit le rayonnement caractéristique de la zone de soudage et assure l'asservissement de la puissance du laser en fonction du rayonnement saisi par le détecteur au cours du travail.

4. Procédé selon les revendications précédentes,
**caractérisé en ce qu'**
une pièce comporte plusieurs cordons de soudure.

5. Procédé selon les revendications précédentes,
**caractérisé en ce que**
la pièce et le faisceau laser exécutent un mouvement relatif linéaire et/ ou un mouvement de rotation.

6. Procédé selon les revendications précédentes,
**caractérisé en ce que**
le mouvement relatif entre la pièce et le faisceau laser est régulé en fonction d'une position d'impact choisie pour le faisceau laser sur la pièce, cette position étant saisie par l'unité d'exploitation.

7. Procédé selon la revendication 6,
**caractérisé en ce que**
le mouvement relatif entre la pièce et le faisceau laser est régulé en fonction de la position d'impact instantanée du faisceau laser sur la pièce, position saisie par une unité d'exploitation.

8. Procédé selon les revendications précédentes,
**caractérisé en ce que**
le mouvement relatif entre la pièce et le faisceau laser est assuré par le déplacement du faisceau laser.

9. Procédé selon les revendications précédentes,
**caractérisé en ce que**
le cordon de soudure est réalisé sous une atmosphère de gaz protecteur.

10. Procédé selon les revendications précédentes,
**caractérisé en ce qu'**
on soude des composants d'horlogerie.

11. Procédé selon les revendications 1 à 9,
**caractérisé en ce qu'**
on soude des composants d'installations d'alimentation en carburant de moteurs à combustion ou de connexions.

12. Procédé selon les revendications 1 à 9,
**caractérisé en ce qu'**
on soude des condensateurs à film.
